(19)

Europäisches
Patentamt
European
Patent Office
Office européen
des brevets

(11) **EP 4 482 139 A1**

(12) **EUROPEAN PATENT APPLICATION**
published in accordance with Art. 153(4) EPC

(43) Date of publication:
**25.12.2024 Bulletin 2024/52**

(21) Application number: **22941476.8**

(22) Date of filing: **15.11.2022**

(51) International Patent Classification (IPC):
**H04N 13/00** (2018.01)      **H04N 13/305** (2018.01)
**H10K 59/00** (2023.01)

(52) Cooperative Patent Classification (CPC):
**G02B 30/27; G02B 30/29; G02F 1/133; G09F 9/33;
H04N 13/00; H04N 13/305**

(86) International application number:
**PCT/CN2022/132070**

(87) International publication number:
**WO 2023/216541 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022  PCT/CN2022/092469**

(71) Applicant: **Beijing Shiyan Technology Co., Ltd.
Beijing 100176 (CN)**

(72) Inventors:
• **GAO, Jian
  Beijing 100176 (CN)**

• **MA, Sen
  Beijing 100176 (CN)**
• **DONG, Xue
  Beijing 100176 (CN)**
• **HONG, Tao
  Beijing 100176 (CN)**
• **PENG, Kuanjun
  Beijing 100176 (CN)**
• **WU, Zhongyuan
  Beijing 100176 (CN)**
• **LI, Fuqiang
  Beijing 100176 (CN)**

(74) Representative: **Cohausz & Florack
Patent- & Rechtsanwälte
Partnerschaftsgesellschaft mbB
Bleichstraße 14
40211 Düsseldorf (DE)**

(54) **DISPLAY APPARATUS**

(57)    A display apparatus. The display apparatus comprises: a display panel, which comprises a plurality of pixel islands (S) arranged in an array and in a row direction and a column direction, wherein each pixel island (S) comprises a plurality of sub-pixels (08) arranged at intervals in the row direction; and a light splitting assembly (02), which is located on a display side of the display panel (01), wherein the light splitting assembly (02) comprises a plurality of light splitting repeating units (03), which extend in the column direction and are successively arranged in the row direction; the light splitting repeating units (03) comprise M light splitting structures (A), which extend in the column direction and are successively arranged in the row direction; each light splitting repeating unit (03) correspondingly covers N columns of sub-pixels (08), M and N being integers greater than 1, and M and N being coprime; each pixel island (S) comprises n sub-pixels (08), which are arranged at intervals in the row direction, n being an integer greater than 1; and each light splitting repeating unit (03) correspondingly covers K columns of pixel islands (S), N = K * n, where K is an integer greater than 1, and M and K are coprime.

EP 4 482 139 A1

FIG. 2

## Description

## Cross Reference to Related Applications

The application claims the priority to Chinese Patent Application No. PCT/CN2022/092469, filed to the China National Intellectual Property Administration on May 12, 2022 and entitled "DISPLAY APPARATUS AND DRIVING METHOD THEREFOR", which is incorporated in its entirety herein by reference.

## Field

The disclosure relates to the field of display technology, and particularly relates to a display apparatus.

## Background

With the continuous development of a display technology, a three dimensional (3D) display technology has received increasing attention. A vivid stereoscopic display image can be exhibited with the aid of the 3D display technology. Its principle is to receive a left eye image and a right eye image with some parallax through the left eye and the right eye respectively, and then superimpose and fuse image information through the brain, so as to create a 3D visual display effect. In order to achieve compatibility between super multi-view 3D display and light field display, traditional sub-pixels are made into pixel island structures, each of which includes a number of sub-pixels. When display information of a number of sub-pixels is different and a single eye enters a plurality of viewpoints, ordinary light field display will be realized. When display information of a number of sub-pixels is different and a single eye enters a single viewpoint, super multi-view light field 3D display will be achievable.

However, 3D display products in the prior art have a low aperture ratio and large crosstalk between views.

## Summary

An embodiment of the disclosure provides a display apparatus. The display apparatus includes a display panel, where the display panel includes a plurality of pixel islands arranged in arrays in a row direction and a column direction, and each pixel island includes a plurality of sub-pixels arranged at intervals in the row direction; and a light-splitting assembly at a display side of the display panel, where the light-splitting assembly includes a plurality of light-splitting repeating units extending in the column direction and continuously arranged in the row direction, the light-splitting repeating unit includes M light-splitting structures extending in the column direction and continuously arranged in the row direction, each light-splitting repeating unit correspondingly covers N columns of sub-pixels, both M and N are integers greater than 1, and M and N are relative prime to each other.

In some embodiments, each light-splitting repeating unit corresponds to K columns of pixel islands, and K is an integer greater than 1.

In some embodiments, N and K are relative prime to each other.

In some embodiments, N/K is an integer.

In some embodiments, each pixel island includes n sub-pixels arranged at intervals in the row direction, n being an integer greater than 1; and each light-splitting repeating unit correspondingly covers K columns of pixel islands, both M and K being integers greater than 1, $N=K*n$, and M and K being relative prime to each other.

In some embodiments, light rays emitted from light-emitting zones of N columns of sub-pixels and split by M light-splitting structures form a continuous light-emitting zone in a space.

In some embodiments, in a horizontal direction, a width of M light-splitting structures is equal to that of N columns of sub-pixels.

In some embodiments, the sub-pixels include sub-pixel opening regions; and in the row direction, a ratio of a total width of n sub-pixel opening regions to a width of the pixel island is greater than or equal to 0.9/M and smaller than or equal to 1.

In some embodiments, in the row direction, the light-emitting zones of N columns of sub-pixels are complementarily spliced in a space.

In some embodiments, in the row direction, a ratio of a width of the sub-pixel opening regions to the width of the pixel island is 1/M.

In some embodiments, in the row direction, the light-emitting zones of N columns of sub-pixels overlap each other in a space.

In some embodiments, in the row direction, the light-emitting zones of N columns of sub-pixels evenly overlap each other in a space.

In some embodiments, in the row direction, a ratio of a width of the sub-pixel opening regions to the width of the pixel island is i/M, i being an integer greater than 1 and smaller than or equal to M-1.

In some embodiments, in the row direction, an absolute value of a width difference between different sub-pixel opening regions is smaller than or equal to 2.5 μm.

In some embodiments, the display apparatus further includes: a spacer dielectric layer between the light-splitting assembly and the display panel.

In some embodiments, the light-splitting structure is a cylindrical lens.

In some embodiments, the cylindrical lens includes a first resin layer having a protrusion, and a planarization resin layer at one side of the first resin layer facing away from the display panel; and a refractive index of the planarization resin layer is smaller than that of the first resin layer.

In some embodiments, the cylindrical lens is a liquid crystal lens.

In some embodiments, a radius of curvature of the cylindrical lens is greater than or equal to 0.87r and smaller than or equal to 1.33r, where $r = \frac{(n1-n2)}{n3} \times \frac{n3L1P1}{W}$, n1 is a refractive index of the first resin layer or an extraordinary-light refractive index of the liquid crystal lens, n2 is a refractive index of the planarization resin layer or an ordinary-light refractive index of the liquid crystal lens, n3 is a refractive index of the spacer dielectric layer, $L1$ is an optimal viewing distance of the display apparatus, P1 is a width of the cylindrical lens in the row direction, and W is a width of a projection of a main lobe viewing angle formed by light rays emitted from the sub-pixel at the optimal viewing distance.

In some embodiments, M is 4, and N is 127; alternatively, M is 4, and N is 185; alternatively, M is 5, and N is 16; alternatively, M is 5, and N is 32; alternatively, M is 5, and N is 64; and alternatively, M is 5, and N is 128.

In some embodiments, M is 5, K is 4, and n is 4; alternatively, M is 5, K is 4, and n is 16; alternatively, M is 3, K is 4, and n is 32; and alternatively, M is 5, K is 2, and n is 16.

In some embodiments, every three pixel islands continuously arranged in the column direction constitute one pixel repeating unit; and in one pixel repeating unit, colors of the sub-pixels of the same pixel island are the same, and colors of the sub-pixels of different pixel islands are different.

In some embodiments, the display apparatus further includes: an eye-tracking system configured to determine a position of eyes of a user in real time.

**Brief Description of the Drawings**

To describe technical solutions in embodiments of the disclosure more clearly, the accompanying drawings required for describing the embodiments are briefly introduced below. Obviously, the accompanying drawings in the following description show merely some embodiments of the disclosure, and those of ordinary skill in the art would also be able to derive other accompanying drawings from these accompanying drawings without creative efforts.

FIG. 1 is a schematic structural diagram of a display apparatus in the related art.
FIG. 2 is a schematic structural diagram of a display apparatus according to an embodiment of the disclosure.
FIG. 3 is a schematic diagram of light paths of light from sub-pixels of a display apparatus according to an embodiment of the disclosure.
FIG. 4 is a schematic diagram of light paths of light from spliced sub-pixels of a display apparatus according to an embodiment of the disclosure.

FIG. 5 is a schematic diagram of light paths of light from sub-pixels of another display apparatus according to an embodiment of the disclosure.
FIG. 6 is a schematic diagram of light paths of light from spliced sub-pixels of another display apparatus according to an embodiment of the disclosure.
FIG. 7 is a schematic structural diagram of another display apparatus according to an embodiment of the disclosure.
FIG. 8 is an angular spectrum of light from sub-pixels of a display apparatus according to an embodiment of the disclosure.
FIG. 9 is an angular spectrum of light from sub-pixels of another display apparatus according to an embodiment of the disclosure.
FIG. 10 is an angular spectrum of light from sub-pixels of yet another display apparatus according to an embodiment of the disclosure.
FIG. 11 is a diagram of a variation relation between crosstalk between adjacent viewpoints and a radius of curvature according to an embodiment of the disclosure.
FIG. 12 is a schematic diagram of sub-pixels at different positions according to an embodiment of the disclosure.
FIG. 13 is a schematic diagram of a variation relation between moire pattern contrast and opening deviations of sub-pixels according to an embodiment of the disclosure.
FIG. 14 is an angular spectrum of light from sub-pixels of yet another display apparatus according to an embodiment of the disclosure.
FIG. 15 is an enlarged schematic diagram of a solid box in FIG. 14 according to an embodiment of the disclosure.
FIG. 16 is an angular spectrum of light from sub-pixels of still another display apparatus according to an embodiment of the disclosure.
FIG. 17 is an enlarged schematic diagram of a solid box in FIG. 16 according to an embodiment of the disclosure.

**Detailed Description**

For making objectives, technical solutions and advantages of embodiments of the disclosure clearer, the technical solutions of the embodiments of the disclosure will be clearly and completely described below in conjunction with the accompanying drawings in the embodiments of the disclosure. Apparently, the embodiments described are some embodiments rather than all embodiments of the disclosure. The embodiments in the disclosure and features of the embodiments can be combined with each other without conflict. Based on the embodiments of the disclosure, all other embodiments obtained by those of ordinary skill in the art without making creative efforts fall within the scope of protection of the disclosure.

Unless otherwise defined, technical or scientific terms used in the disclosure should have ordinary meanings as understood by those of ordinary skill in the art to which the disclosure belongs. "First", "second", and other similar words used in the disclosure do not indicate any order, amount or importance, but are only used to distinguish different components. "Include", "comprise", and other similar words indicate that elements or objects before the word include elements or objects after the word and their equivalents, without excluding other elements or objects. "Connection", "connected", and other similar words are not limited to physical or mechanical connections, but can include electrical connections, which can be direct or indirect.

It should be noted that a size and a shape of each figure in the drawings do not reflect a true scale, but only for illustrating the disclosure. Throughout the drawings, identical or similar reference numerals denote identical or similar elements or elements having identical or similar functions.

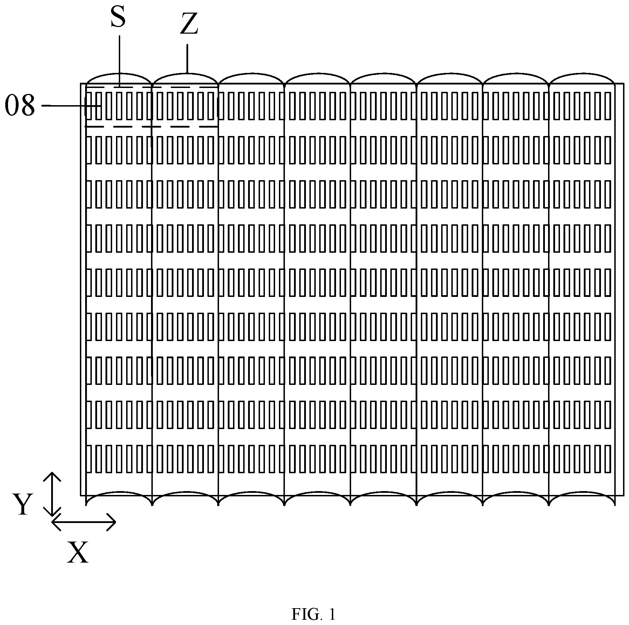

In the related art, as shown in FIG. 1, a display apparatus includes a plurality of pixel islands S and a plurality of cylindrical lenses Z arranged at intervals in a row direction X and a column direction Y Each pixel island S has a plurality of sub-pixels 08 arranged at intervals in the row direction X; and one column of pixel islands S corresponds to m cylindrical lenses Z. In FIG. 1, m=2; and an aperture ratio of the sub-pixels in the row direction is 11m. The larger m, the lower a lateral aperture ratio of the sub-pixels. With fluctuation of sub-pixel opening regions, that is, when deviations exist in sub-pixel opening regions at different positions, a moire pattern risk is prone to occurrence. The greater an opening deviation of the sub-pixels, the more likely it is to increase a moire pattern risk. Even if the aperture ratio of the sub-pixels is increased and then the aperture ratio of the sub-pixels in the row direction is greater than 11m, when the number of cylindrical lenses increases, a size of the cylindrical lenses in the row direction gradually decreases, such that difficulty in manufacturing the cylindrical lenses is increased. A light-emitting divergence angle of a sub-pixel is increased due to diffraction of a small-sized cylindrical lens, crosstalk between views increases, and further a display effect is influenced. Moreover, with increase in the number of cylindrical lenses, a size of the cylindrical lenses may decrease, a focal length of the cylindrical lenses may decrease, and a placement height of the cylindrical lenses needs to be decreased accordingly. For a liquid crystal display screen, it is difficult to achieve a structure with a too small placement height. In addition, after the lateral aperture ratio of the sub-pixels increases, light rays from all viewpoints overlap each other, resulting in crosstalk, which leads to parallax images overlapping and blurred display.

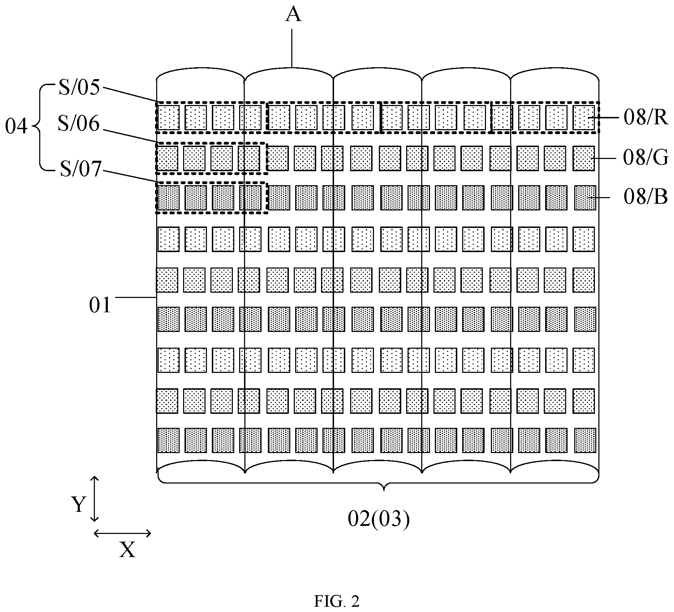

To solve the technical problems existing in the related art, an embodiment of the disclosure provides a display apparatus. As shown in FIG. 2, the display apparatus includes:

a display panel 01, where the display panel 01 includes a plurality of pixel islands S arranged in arrays in a row direction X and a column direction Y, and each pixel island S includes a plurality of sub-pixels 08 arranged at intervals in the row direction X; and a light-splitting assembly 02 at a display side of the display panel 01, where the light-splitting assembly 02 includes a plurality of light-splitting repeating units 03 extending in the column direction Y and continuously arranged in the row direction X, the light-splitting repeating unit 03 includes M light-splitting structures A extending in the column direction Y and continuously arranged in the row direction X, each light-splitting repeating unit correspondingly covers N columns of sub-pixels, both M and N are integers greater than 1, and M and N are relative prime to each other.

In the display apparatus provided in the embodiment of the disclosure, M light-splitting structures correspondingly cover N columns of sub-pixels, both M and N are integers greater than 1. That is, the light-splitting structures and the sub-pixels are in many-to-many correspondence. Sizes of the light-splitting structures in the row direction may be prevented from being too small, difficulty in manufacturing the light-splitting assembly may be prevented from being increased, and influence on a display effect caused by increased crosstalk between views due to increase in a light-emitting divergence angle of a sub-pixel due to diffraction of a light-splitting structure too small in size may be further avoided.

It should be noted that the display apparatus provided in the embodiment of the disclosure may be used for three dimensional (3D) display, and may further switch between 3D and two dimensional (2D) display. A pixel island may be used as one secondary pixel of 2D display. One pixel island includes a plurality of sub-pixels, such that 3D display may maintain the same resolution as 2D display. By combining an eye-tracking system, multi-view display with a large viewing angle may be achieved, and 3D display with more pixels per inch (ppi) may be further achieved, with more information and less color crosstalk between adjacent viewpoints.

During specific implementation, the light-splitting structures are configured to control light-emitting angles of the sub-pixels, so as to achieve directional light emission.

During specific implementation, the display panel may be one of a liquid crystal display (LCD) panel, an organic light-emitting diode (OLED) display panel, a quantum dot light-emitting diode (QLED), a micro inorganic light-emitting diode (micro LED) display panel, and a mini LED display panel.

In some embodiments, as shown in FIG. 2, every three pixel islands S continuously arranged in the column direction Y constitute one pixel repeating unit 04; and

in one pixel repeating unit 04, color of the sub-pixels 08 of the same pixel island S is the same, and colors of the sub-pixels 08 of different pixel islands S are different.

In some embodiments, as shown in FIG. 2, one pixel repeating unit 04 includes: a first pixel island 05, a second pixel island 06, and a third pixel island 07. The first pixel island 05 includes a plurality of red sub-pixels R, the second pixel island 06 includes a plurality of green sub-pixels G, and the third pixel island 07 includes a plurality of blue sub-pixels B.

In some embodiments, as shown in FIG. 2, colors of all the sub-pixels 08 in one row of pixel islands S are the same.

In some embodiments, as shown in FIG. 2, each light-splitting repeating unit 03 corresponds to K columns of pixel islands S.

In the display apparatus provided in the embodiment of the disclosure, M light-splitting structures correspond to K columns of pixel islands, both M and K are integers greater than 1, that is, the light-splitting structures and pixel island columns are in many-to-many correspondence. Sizes of the light-splitting structures in the row direction may be prevented from being too small, difficulty in manufacturing the light-splitting assembly may be prevented from being increased, and influence on a display effect caused by increased crosstalk between views due to increase in a light-emitting divergence angle of a sub-pixel due to diffraction of a light-splitting structure too small in size may be further avoided.

In some embodiments, as shown in FIG. 2, N/K is an integer. That is, N columns of sub-pixels corresponding to M light-splitting units may be evenly divided into a plurality of columns of pixel islands.

During specific implementation, as shown in FIG. 2, each pixel island S includes n sub-pixels 08 arranged at intervals in the row direction X, n being an integer greater than 1; and each light-splitting repeating unit correspondingly covers K columns of pixel islands S, and N=K*n, K being an integer greater than 1, and M and K being relative prime to each other.

In some embodiments, N and K are relative prime to each other. That is, N columns of sub-pixels corresponding to M light-splitting units cannot be evenly divided into a plurality of columns of pixel islands.

It should be noted that under the condition that each light-splitting repeating unit corresponds to K columns of pixel islands, each light-splitting repeating unit 03 may cover K columns of pixel islands S, as shown in FIG. 2. Certainly, during specific implementation, under the condition that each light-splitting repeating unit corresponds to K columns of pixel islands, at least one pixel island at an edge may be partially covered by the light-splitting repeating unit, that is, the light-splitting repeating unit does not cover the K columns of pixel islands completely. When the light-splitting repeating unit does not cover the K columns of pixel islands completely, M, N and K of the display apparatus may be set in such a way that N and K are relative prime to each other.

During specific implementation, even if N columns of sub-pixels corresponding to M light-splitting units cannot be evenly divided into a plurality of columns of pixel islands, the light-splitting structures and the pixel islands are still in many-to-many correspondence. Sizes of the light-splitting structures in the row direction may be prevented from being too small, difficulty in manufacturing the light-splitting assembly may be prevented from being increased, and influence on a display effect caused by increased crosstalk between views due to increase in a light-emitting divergence angle of a sub-pixel due to diffraction of a light-splitting structure too small in size may be further avoided.

In some embodiments, in a horizontal direction, a width of M light-splitting structures is equal to that of N columns of sub-pixels.

In some embodiments, light-emitting zones of the respective sub-pixels in N columns of sub-pixels are staggered in a space, such that light rays emitted from the light-emitting zones of the N columns of sub-pixels and split by M light-splitting structures form a continuous light-emitting zone in a space.

In the display apparatus provided in the embodiment of the disclosure, M light-splitting structures cover N columns of sub-pixels, and the light-emitting zones of all the sub-pixels in N columns of sub-pixels are staggered in a space. The light-splitting structures have a small size in the row direction, and for N columns of sub-pixels covered with M light-splitting structures, human eyes cannot determine which light-splitting structure a light ray is emitted from, so the human eyes see that light rays emitted from N columns of sub-pixels and split by the M light-splitting structures above the sub-pixels form a continuous light-emitting zone in a space, and the human eyes cannot see a "black zone" when moving in a visible space.

In some embodiments, the sub-pixels include sub-pixel opening regions; and in the row direction, a ratio of a total width of n sub-pixel opening regions to a width of the pixel island is greater than or equal to 0.9/M and smaller than or equal to 1. That is, an aperture ratio of the sub-pixels in the pixel island is greater than or equal to 0.9/M and smaller than or equal to 1.

In some embodiments, in the row direction, the light-emitting zones of N columns of sub-pixels are complementarily spliced in a space.

In some embodiments, in the row direction, a ratio of a width of the sub-pixel opening regions to the width of the pixel island is 1/M. That is, an aperture ratio of the sub-pixels in the pixel island is 1/M. In this way, all the sub-pixels below each light-splitting repeating unit may be arranged in a staggered and complementary manner relative to the corresponding light-splitting structures, such that the light-emitting zones of N columns of sub-pixels are complementarily spliced in a space, that is, light paths of all the viewpoints are closely connected, moire patterns may be eliminated, and a display effect may be improved.

In some embodiments, in the row direction, the light-emitting zones of N columns of sub-pixels overlap each other in a space.

In some embodiments, in the row direction, the light-emitting zones of N columns of sub-pixels evenly overlap each other in a space.

In some embodiments, in the row direction, a ratio of a width of the sub-pixel opening region to the width of the pixel island is i/M, i being an integer greater than 1 and smaller than or equal to M-1.

It should be noted that in the display apparatus provided in the embodiment of the disclosure, M light-splitting structures correspond to N columns of sub-pixels, and M light-splitting structures correspond to K columns of pixel islands, that is, the sub-pixels and the light-splitting structures are in many-to-many correspondence, and meanwhile, the pixel islands and the light-splitting structures are in many-to-many correspondence. When the width of M light-splitting structures is equal to that of N columns of sub-pixels in the row direction, even if the number of light-splitting structures is increased, difficulty in manufacturing the light-splitting structures due to too small a size in the row direction may be avoided. When the aperture ratio of the sub-pixels is i/M and i is an integer greater than 1 and smaller than or equal to M-1, compared with the condition that one pixel island corresponds to a plurality of light-splitting structures in the related art, the aperture ratio of the sub-pixels may be further improved under the same number of light-splitting structures.

During specific implementation, when each light-splitting repeating unit corresponds to K columns of pixel islands and N=K*n, a width of N columns of sub-pixels is a width of K columns of pixel islands, and in the horizontal direction, a width of M light-splitting structures is equal to that of K columns of pixel islands.

During specific implementation, when each light-splitting repeating unit corresponds to K columns of pixel islands and N=K*n, and light-emitting zones of all the sub-pixels in K pixel islands are staggered in a space, such that light rays emitted from all the sub-pixels in the K pixel islands and split by M light-splitting structures form a continuous light-emitting zone in a space.

It should be noted that the space in "light-emitting zones of all the sub-pixels in K pixel islands are staggered in a space" refers to the visible space of the display apparatus.

In the display apparatus provided in the embodiment of the disclosure, M light-splitting structures cover K pixel islands, and the light-emitting zones of all the sub-pixels in K pixel islands are staggered in a space. The light-splitting structures have a small size in the row direction, and for K pixel islands covered with M light-splitting structures, human eyes cannot determine which light-splitting structure a light ray is emitted from, so the human eyes see that light rays emitted from the K pixel islands and split by the M light-splitting structures above the pixel islands form a continuous light-emitting zone in a space, and the human eyes cannot see a "black zone" when moving in the visible space.

It should be noted that viewing angles include a main lobe viewing angle and a side lobe viewing angle. The main lobe viewing angle refers to a viewing angle formed in a space after light emitted from a sub-pixel is split by a light-splitting structure directly above the sub-pixel. The side lobe viewing angle refers to a viewing angle formed in a space after a light ray emitted from a sub-pixel passes a light-splitting structure near the light-splitting structure directly above the sub-pixel. For example, a primary side lobe viewing angle is formed after light passes a first light-splitting structure adjacent to the light-splitting structure directly above, a secondary side lobe viewing angle is formed after light passes a second light-splitting structure adjacent to the light-splitting structure directly above, and so on.

In order to better understand the solution, with the main lobe viewing angle as an example, and with the condition that each light-splitting repeating unit corresponds to K columns of pixel islands and N=K*n as an example, staggered arrangement of light-emitting zones of all sub-pixels in K pixel islands in a space and formation of a continuous light-emitting zone in a space by light rays emitted from light-emitting zones of all sub-pixels in K pixel islands and split by M light-splitting structures are illustrated.

During specific implementation, in M light-splitting structures arranged in the row direction, a viewpoint difference between two adjacent sub-pixels among a plurality of sub-pixels corresponding to each light-splitting structure is M.

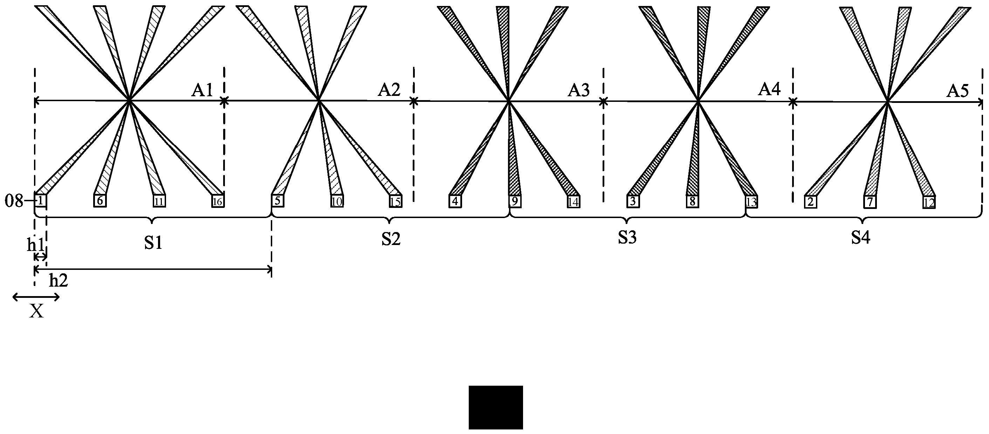

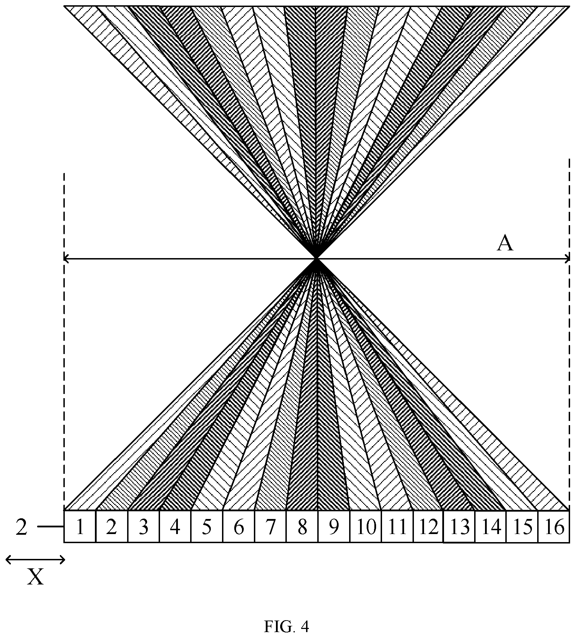

In some embodiments, K is 4, M is 5, n is 4, and a light path diagram of K columns of pixel islands is as shown in FIGS. 3 and 4. 4 pixel islands corresponding to 5 light-splitting structures include 16 sub-pixels, which are labeled as a first sub-pixel 1 to a sixteenth sub-pixel 16, respectively, and an index of each sub-pixel represents a corresponding viewpoint. 4 pixel islands are a first pixel island S1, a second pixel island S2, a third pixel island S3, and a fourth pixel island S4. The first pixel island S1 includes a first sub-pixel 1, a sixth sub-pixel 6, an eleventh sub-pixel 11, and a sixteenth sub-pixel 16. The second pixel island S2 includes a fifth sub-pixel 5, a tenth sub-pixel 10, a fifteenth sub-pixel 15, and a fourth sub-pixel 4. The third pixel island S3 includes a ninth sub-pixel 9, a fourteenth sub-pixel 14, a third sub-pixel 3, and an eighth sub-pixel 8. The fourth pixel island S4 includes a thirteenth sub-pixel 13, a second sub-pixel 2, a seventh sub-pixel 7, and a twelfth sub-pixel 12. The light-splitting structures corresponding to the 16 sub-pixels are labeled as a first light-splitting structure A1 to a fifth light-splitting structure A5, respectively. As shown in FIG. 3, the first light-splitting structure A1 covers the first sub-pixel 1, the sixth sub-pixel 6, the eleventh sub-pixel 11, and the sixteenth sub-pixel 16, the second light-splitting structure A2 covers the fifth sub-pixel 5, the tenth sub-pixel 10, and the fifteenth sub-pixel 15, the third light-splitting structure A3 covers the fourth sub-pixel 4, the ninth sub-pixel 9, and the fourteenth sub-pixel 14, the fourth light-splitting structure A4 covers the third sub-pixel 3, the eighth sub-pixel 8, and the thirteenth sub-pixel 13, and the fifth light-splitting structure A5 covers the second sub-pixel 2, the seventh sub-pixel 7, and the twelfth sub-pixel 12. As shown in FIG. 3, no repeating unit is formed according to a relative position relation between each sub-pixel and the light-splitting structure in the 4 pixel islands. If all the sub-pixels are spliced in a viewpoint order, a relative position of each sub-pixel and the light-splitting structure remains unchanged. As shown in FIG. 4, after the sub-pixels corresponding to each light-splitting structure are spliced, positions of the sub-pixels are complementary, that is, a gap between the sub-pixels is 0, and the relative position relation between the sub-pixels and the light-splitting structures forms a staggered and complementary arrangement. Accordingly, light-emitting zones of all the sub-pixels in the 4 pixel islands are staggered in a space, and the light-emitting zones of all the sub-pixels in the 4 pixel islands are also arranged in a staggered and complementary manner in a space. As shown in FIG. 3, there is a gap between the first sub-pixel 1 and the fifth sub-pixel 5, such that light rays emitted from the adjacent sub-pixels corresponding to the same light-splitting structure A and split by the same light-splitting structure have a discontinuous light-emitting angle in a space. However, all the sub-pixels in the 4 pixel islands are staggered relative to the 5 light-splitting structures A, and the light-emitting zones of all the sub-pixels in the 4 pixel islands are staggered in a space, such that light-emitting angles of all the light-splitting structures A are also staggered and complementary. The light-splitting structures A have a small size, and human eyes cannot determine the light-splitting structure A from which a light ray is emitted, such that as shown in FIG. 4, the human eyes see that light rays emitted from the 16 sub-pixels in 4 pixel islands and split by the 5 light-splitting structures form a continuous light-emitting zone in a space, and the human eyes cannot see a "black zone" when moving in a space.

Continuity of the side lobe viewing angle is the same as that of the main lobe viewing angle, and K pixel islands may complement each other to form a continuous primary side lobe viewing angle through two discontinuous primary side lobe viewing angles of adjacent light-splitting structures. Moreover, in the horizontal direction, the width of M light-splitting structures is equal to that of K columns of pixel islands, so a main lobe viewing angle boundary is parallel to a side lobe viewing angle boundary. The human eyes cannot distinguish a distance between the main lobe viewing angle boundary and the side lobe viewing angle boundary, such that the main lobe viewing angle and the side lobe viewing angle are observed to be continuous. In the same way, the primary side lobe viewing angle and a secondary side lobe viewing angle are also continuous, the secondary side lobe viewing angle and a tertiary side lobe viewing angle are also continuous, and so on. In this way, a continuous viewing angle is obtained.

In some embodiments, the sub-pixels include sub-pixel opening regions; and as shown in FIG. 3, in the row direction X, the opening regions of all the sub-pixels 08 have the same width h1.

In some embodiments, in the row direction, a ratio of a total width $n \times h1$ of n sub-pixel opening regions to a width h2 of the pixel island is greater than or equal to 0.9/M and smaller than or equal to 1. That is, an aperture ratio of sub-pixels in the pixel island is greater than or equal to 0.9/M and smaller than or equal to 1.

In some embodiments, as shown in FIGS. 3 and 4, in the row direction X, light-emitting zones of N columns of sub-pixels 08 are complementarily spliced in a space, that is, light-emitting zones of all sub-pixels 08 in K pixel islands 1 are complementarily spliced in a space.

In some embodiments, as shown in FIG. 3, in the row direction X, a ratio of the total width of the opening regions of n sub-pixels 08 to the width of the pixel island 1 is 1/M. That is, an aperture ratio of sub-pixels in the pixel island is 1/M. In this way, all the sub-pixels below each light-splitting repeating unit may be arranged in a staggered and complementary manner relative to the corresponding light-splitting structures, such that light-emitting zones of all the sub-pixels in the K pixel islands are complementarily spliced in a space, that is, light paths of all viewpoints are closely contacted, moire patterns may be eliminated, and a display effect may be improved.

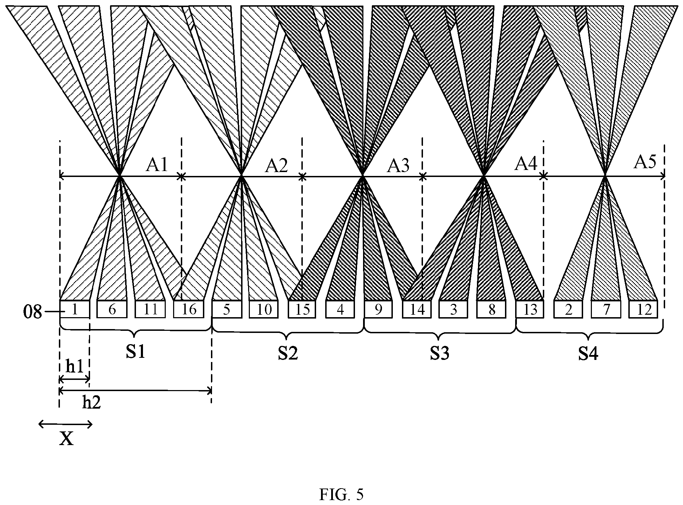

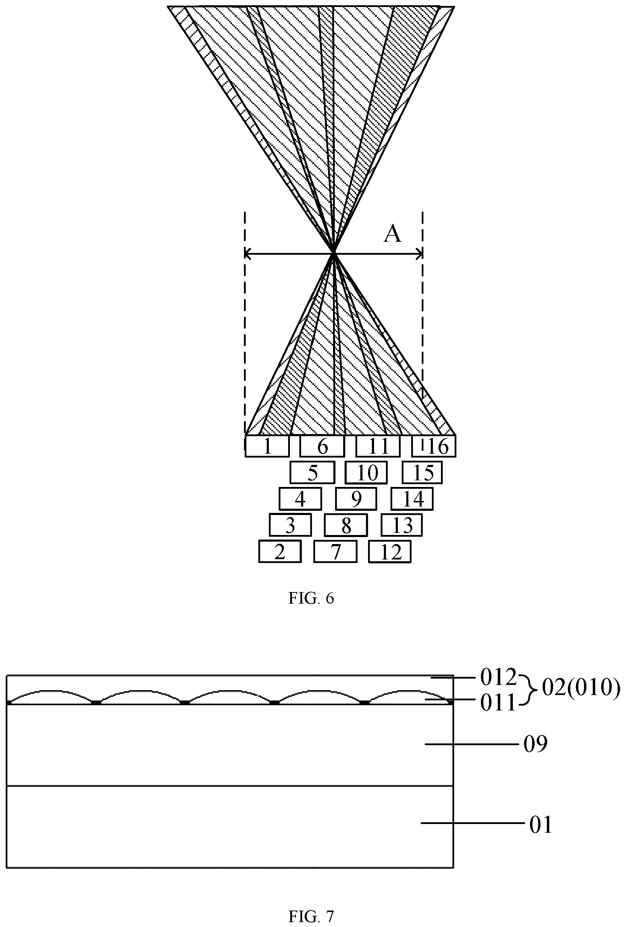

In some embodiments, as shown in FIGS. 5 and 6, in the row direction, the light-emitting zones of all the sub-pixels in the K pixel islands overlap each other in a space.

In some embodiments, as shown in FIGS. 5 and 6, in the row direction, the light-emitting zones of all the sub-pixels in the K pixel islands evenly overlap each other in a space.

Then, still with the main lobe viewing angle as an example, formation of a continuous light-emitting zone in a space by light rays emitted from light-emitting zones of all sub-pixels in K pixel islands and split by M light-splitting structures is illustrated.

In some embodiments, K is 4, M is 5, n is 4, and a light path diagram of K columns of pixel islands is as shown in FIGS. 5 and 6. 4 pixel islands corresponding to 5 light-splitting structures include 16 sub-pixels, which are labeled as a first sub-pixel 1 to a sixteenth sub-pixel 16, respectively, and an index of each sub-pixel represents a corresponding viewpoint. 4 pixel islands are a first pixel island S1, a second pixel island S2, a third pixel island S3, and a fourth pixel island S4. The first pixel island S1 includes a first sub-pixel 1, a sixth sub-pixel 6, an eleventh sub-pixel 11, and a sixteenth sub-pixel 16. The second pixel island S2 includes a fifth sub-pixel 5, a tenth sub-pixel 10, a fifteenth sub-pixel 15, and a fourth sub-pixel 4. The third pixel island S3 includes a ninth sub-pixel 9, a fourteenth sub-pixel 14, a third sub-pixel 3, and an eighth sub-pixel 8. The fourth pixel island S4 includes a thirteenth sub-pixel 13, a second sub-pixel 2, a seventh sub-pixel 7, and a twelfth sub-pixel 12. The light-splitting structures corresponding to the 16 sub-pixels are labeled as a first light-splitting structure A1 to a fifth light-splitting structure A5, respectively. As shown in FIG. 5, the first light-splitting structure A1 covers the first sub-pixel 1, the sixth sub-pixel 6, the eleventh sub-pixel 11, and part of the sixteenth sub-pixel 16, the second light-splitting structure A2 covers part of the sixteenth sub-pixel 16, the fifth sub-pixel 5, the tenth sub-pixel 10, and part of the fifteenth sub-pixel 15, the third light-splitting structure A3 covers part of the fifteenth sub-pixel 15, the fourth sub-pixel 4, the ninth sub-pixel 9, and part of the fourteenth sub-pixel 14, the fourth light-splitting structure A4 covers part of the fourteenth sub-pixel 14, the third sub-pixel 3, the eighth sub-pixel 8, and the thirteenth sub-pixel 13, and the fifth light-splitting structure A5 covers the second sub-pixel 2, the seventh sub-pixel 7, and the twelfth sub-pixel 12. As shown in FIG. 5, no repeating unit is constituted according to a relative position relation between each sub-pixel and the light-splitting structure in the 4 pixel islands. If all the sub-pixels are spliced in a viewpoint order, a relative position of each sub-pixel and the light-splitting structure remains unchanged. As shown in FIG. 4, after the sub-pixels corresponding to each light-splitting structure are spliced, positions of the sub-pixels are overlapped, and the relative position relation between the sub-pixels and the light-splitting structures forms a staggered and complementary arrangement mode. Accordingly, light-emitting zones of all the sub-pixels in the 4 pixel islands are staggered in a space, and the light-emitting zones of all the sub-pixels in the 4 pixel islands are also arranged in a staggered and complementary manner in a space. As shown in FIG. 5, there is a gap between the first sub-pixel 1 and the fifth sub-pixel 5, such that light rays emitted from the adjacent sub-pixels corresponding to the same light-splitting structure A and split by the same light-splitting structure have a discontinuous light-emitting angle in a space. However, all the sub-pixels in the 4 pixel islands are arranged in a staggered, even and overlapped manner relative to the 5 light-splitting structures A, and the light-emitting zones of all the sub-pixels in the 4 pixel islands evenly overlap each other in a space, such that light-emitting angles of all the light-splitting structures A are also staggered, even and overlapped. The light-splitting structures A have a small size, and human eyes cannot determine the light-splitting structure A from which a light ray is emitted, such that as shown in FIG. 6, the human eyes see that light rays emitted from the 16 sub-pixels in 4 pixel islands and split by the 5 light-splitting structures form a continuous light-emitting zone in a space, and the human eyes cannot see a "black zone" when moving in a space.

In some embodiments, as shown in FIG. 5, in the row direction, a ratio of a total width n×h1 of n sub-pixel opening regions to a width h2 of the pixel island is i/M, i being an integer greater than 1 and smaller than or equal to M-1. That is, an aperture ratio of sub-pixels in the pixel island is i/M. In this way, all the sub-pixels below each light-splitting repeating unit may be arranged in a staggered, even and overlapped manner relative to the corresponding light-splitting structures, such that light-emitting zones of all the sub-pixels in the K pixel islands evenly overlap each other, that is, light paths of all the viewpoints evenly overlap each other, and similarly, moire patterns may be eliminated, and a display effect may be improved.

During specific implementation, when the light-emitting zones of all the sub-pixels in K pixel islands evenly overlap each other in a space, a ratio of an area of an overlapping zone of light-emitting zones of two sub-pixels having adjacent indexes to an area of a light-emitting zone of one of the sub-pixels is (i-1)/i. A ratio of an area of an overlapping zone of light-emitting zones of two sub-pixels having adjacent indexes to an area of one of the sub-pixels is (i-1)/M.

It should be noted that when a ratio of the total width n×h1 of n sub-pixel opening regions to the width h2 of the pixel island is 1/M in the row direction, that is, i=1, light-emitting zones of all the sub-pixels do not overlap each other in a space. When i=2, a ratio of an area of an overlapping zone of light-emitting zones of two sub-pixels having adjacent indexes to an area of a light-emitting zone of one of the sub-pixels is 1/2, and a ratio of an area of an overlapping zone of light-emitting zones of two sub-pixels having adjacent indexes to an area of one of the sub-pixels is 1/M; when i=3, a ratio of an area of an overlapping zone of light-emitting zones of two sub-pixels having adjacent indexes to an area of a light-emitting zone of one of the sub-pixels is 2/3, and a ratio of an area of an overlapping zone of light-emitting zones of two sub-pixels having adjacent indexes to an area of one of the sub-pixels is 2/M; when i=4, a ratio of an area of an overlapping zone of light-emitting zones of two sub-pixels having adjacent indexes to an area of a light-emitting zone of one of the sub-pixels is 3/4, and a ratio of an area of an overlapping zone of light-emitting zones of two sub-pixels having adjacent indexes to an area of one of the sub-pixels is 3/M; when i=M-1, a ratio of an area of an overlapping zone of light-emitting zones of two sub-pixels having adjacent indexes to an area of a light-emitting zone of one of the sub-pixels is (M-2)/(M-1), and a ratio of an area of an overlapping zone of light-emitting zones of two sub-pixels having adjacent indexes to an area of one of the sub-pixels is (M-2)/M; and so on.

It should be noted that in the display apparatus provided in the embodiment of the disclosure, M light-splitting structures correspond to K columns of pixel islands, and both M and K are integers greater than 1, that is, the pixel islands and the light-splitting structures are in many-to-many correspondence. When the width of M light-splitting structures is equal to that of K columns of pixel islands in the row direction, even if the number of light-splitting structures is increased, difficulty in manufacturing the light-splitting structures due to too small a size in the row direction may be avoided. When the aperture ratio of the sub-pixels in the pixel island is i/M and i is an integer greater than 1 and smaller than or equal to M-1, compared with the condition that one sub-pixel corresponds to a plurality of light-splitting structures in the related art, the aperture ratio of the sub-pixels may be further improved under the same number of light-splitting structures.

It should be noted that illustration is conducted with the condition that a ratio of a total width of n sub-pixel opening regions to a width of a pixel island in the row direction in FIG. 5 is (M-1)/M as an example, that is, an aperture ratio of sub-pixels in the pixel island is 4/5 in FIG. 5. When an aperture ratio of the sub-pixels in the pixel island is (M-1)/M, the aperture ratio of the sub-pixels may be improved to the maximum extent under the condition that the light-emitting zones of all the sub-pixels in K pixel islands evenly overlap each other in a space in the row direction. Certainly, during specific implementation, the aperture ratio of the sub-pixels in the pixel island may also be 2/M, 3/M, etc.

In some embodiments, M is 4, and N is 127; alternatively, M is 4, and N is 185; alternatively, M is 5, and N is 16; alternatively, M is 5, and N is 32; alternatively, M is 5, and N is 64; and alternatively, M is 5, and N is 128.

During specific implementation, when N=K*n, for example, M is 5, N is 16, K is 4, and n is 4; alternatively, M is 5, N is 64, K is 4, and n is 16; alternatively, M is 3, N is 128, K is 4, and n is 32; and alternatively, M is 5, K is 2, and n is 16.

In some embodiments, as shown in FIG. 7, the display apparatus further includes:

a spacer dielectric layer 09 between the light-splitting assembly 02 and the display panel 01.

In some embodiments, the light-splitting structure is a cylindrical lens.

In some embodiments, as shown in FIG. 7, the cylindrical lens 010 includes a first resin layer 011 having a protrusion, and a planarization resin layer 012 at a side of the first resin layer 011 facing away from the display panel 01; and a refractive index of the planarization resin layer 012 is smaller than that of the first resin layer 011.

Alternatively, in some embodiments, the cylindrical lens is a liquid crystal lens.

Certainly, during specific implementation, the light-splitting structure may be a geometric lens, a diffraction lens, a liquid lens, or another structural apparatus capable of controlling a light-emitting direction of a sub-pixel.

In some embodiments, a placement height of the light-splitting structure, that is, a thickness H of the spacer dielectric layer, satisfies the following condition:

$$H = \frac{n3L1P1}{W}$$

where, $L1$ is an optimal viewing distance of the display apparatus; W is a width of a projection of a main lobe viewing angle formed by light rays emitted from a sub-pixel at the optimal viewing distance, that is, W is a total width of viewpoints at the optimal viewing distance without repeated viewpoints; and $n3$ is a refractive index of the spacer dielectric layer.

In some embodiments, the cylindrical lens includes a first resin layer having a protrusion, and a planarization resin layer at a side of the first resin layer facing away from the display panel; and a refractive index of the planarization resin layer is smaller than that of the first resin layer.

Alternatively, in some embodiments, the cylindrical lens is a liquid crystal lens.

In some embodiments, a radius of curvature R of the cylindrical lens is greater than or equal to 0.87r and smaller than or equal to 1.33r, where

$$r = \frac{(n1-n2)H}{n3} = \frac{(n1-n2)}{n3} \times \frac{n3L1P1}{W}$$

, n1 is a refractive index of the first resin layer or an extraordinary-light refractive index of the liquid crystal lens, n2 is a refractive index of the planarization resin layer or an ordinary-light refractive index of the liquid crystal lens, n3 is a refractive index of the spacer dielectric layer, and H is a thickness of the spacer dielectric layer.

It should be noted that $r = \frac{(n1-n2)}{n3} \times \frac{n3L1P1}{W}$ is an ideal value of a radius of curvature of the cylindrical lens obtained according to a design of an ideal lens focal plane, in which a pixel light-emitting surface is located on a focal plane of the lens. During specific implementation, the radius of curvature of the cylindrical lens may be adjusted on the basis of the ideal value of the radius of curvature according to actual needs.

Then, with the light-splitting structure as a cylindrical lens as an example, parameter designs of the light-splitting structure in the display apparatus provided in the embodiment of the disclosure are introduced.

During specific implementation, when N=K*n, for example, K=4, M=5, n=16, N=64, the display apparatus includes 3840×2160 pixel islands, and h2=181.8 μm.

In some embodiments, when the width of M light-splitting structures is equal to that of K columns of pixel islands in the row direction, the width of the cylindrical lens in the row direction satisfies P1=K×h2/M. K=4, M=5, and P1=145.44 μm.

It should be noted that since the total number of pixel islands included in the display apparatus is resolution of 2D display, 2D display with retina-level resolution should be achieved for sizes of the pixel islands of the display apparatus provided in the embodiment of the disclosure, that is, included angles between the pixel islands and human eyes are 1", such that $L1$ =630 mm is the optimal viewing distance. In order to ensure no crosstalk between left and right eyes of 3D display at the optimal viewing distance, it is necessary to maximize the number of viewpoint intervals between the left and right eyes at the optimal viewing distance, such that a total width of viewpoints without repeated viewpoints at the optimal viewing distance and a pupil distance D satisfy

$$D = (\frac{1}{2} + m)W$$

, where m is an integer greater than or equal to 0. In this case, it may be seen that with increase in m, a viewpoint density may gradually increase, but a moving range of the human eyes may gradually decrease. In the embodiment of the disclosure, a large moving range of human eyes is preferable, such that m=0, the pupil distance D of people is usually 65 mm, that is, W=2*D=130 mm. The spacer dielectric layer is generally made of glass, and n3=1.5. L1=630 mm, W=130 mm, n3=1.5 and P1=145.44 $\mu$m are substituted

into $H=\frac{n3 L1 P1}{W}$ , and H=1057 $\mu$m is obtained.

During specific implementation, if $n_1$=1.55, $n_2$=1.42, and n3=1.5, H=1057 $\mu$m, and

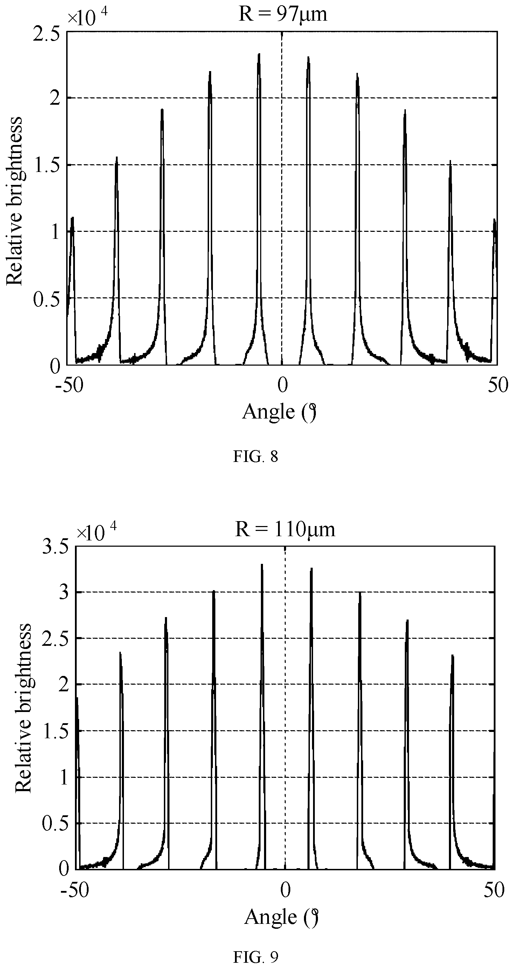

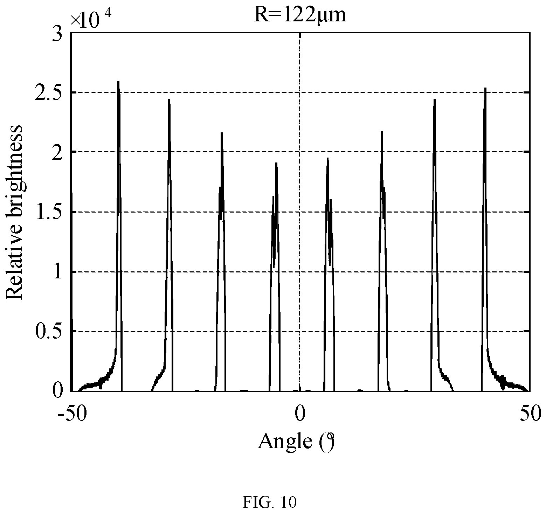

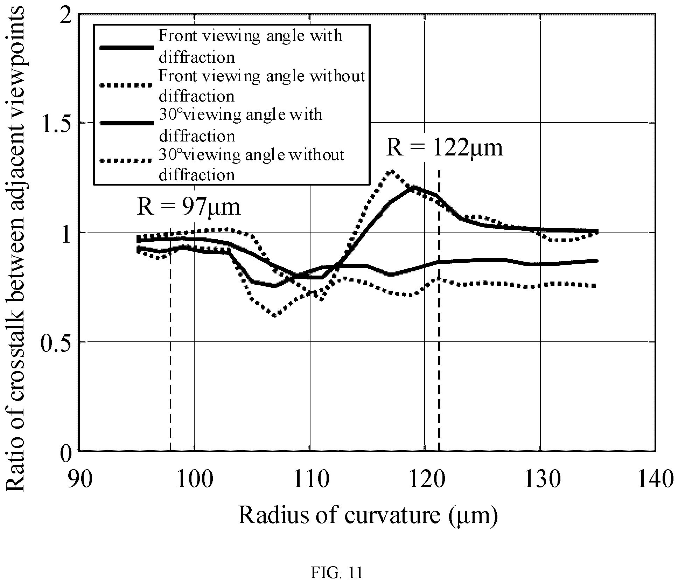

$r=\frac{(n1-n2)H}{n3}=91.6\ \mu m$ . Then, a simulation result under the condition that the radius of curvature of the cylindrical lens is greater than or equal to 0.87r and smaller than or equal to 1.33r is introduced. According to the above computed parameters: $P_1$=145.44 $\mu$m, H=1057 $\mu$m, r=91.6 $\mu$m, and h2=11.3625 $\mu$m, modeling is conducted, and then radii of curvature is scanned. FIGS. 8-10 are angular spectra of light from all sub-pixels under the radii of curvature of 97 $\mu$m, 110 $\mu$m, and 122 $\mu$m, respectively. It may be seen that angular spectra of sub-pixels under different radii of curvature are different, and crosstalk between all viewpoints is also different. The crosstalk between viewpoints is computed according to the angular spectra of all the viewpoints, and a variation relation between crosstalk between adjacent viewpoints and a radius of curvature as shown in FIG. 11 is obtained. In order to obtain small crosstalk between adjacent viewpoints without obvious change with fluctuation of radii of curvature, and a large viewing range of zero crosstalk between left and right eyes, a radius of curvature R is preferably 97 $\mu$m at a front viewing angle, and a radius of curvature R is preferably 122 $\mu$m at a large viewing angle. Moreover, according to crosstalk data comparison between diffraction and no diffraction, it may be seen that 4 pixel islands correspond to 5 cylindrical lenses in the embodiment of the disclosure, such that the width of the cylindrical lens is increased, and influence of diffraction on crosstalk is small, which is conducive to feasibility of a cylindrical lens preparation process and effectively avoids influence of diffraction on crosstalk due to a small size of the cylindrical lens.

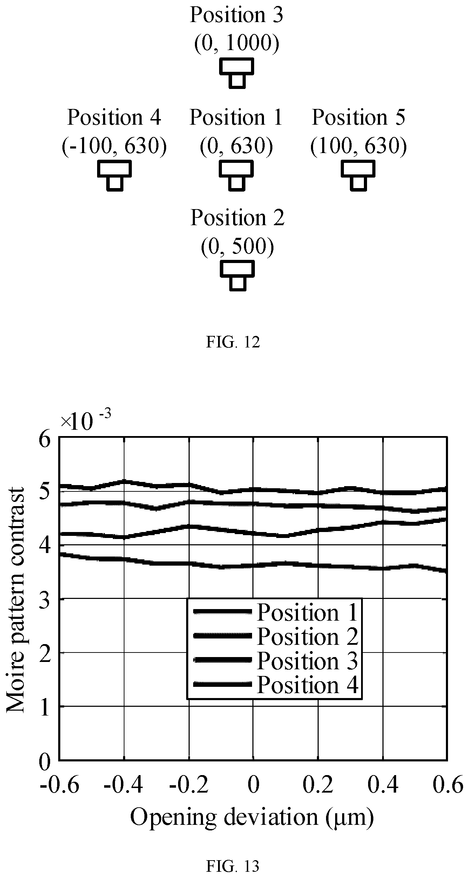

During specific implementation, when the cylindrical lens is a zoom liquid crystal lens, the cylindrical lens may have different radii of curvature at different viewing angles, such that crosstalk between adjacent viewpoints may be relatively small without obvious change with fluctuation of radii of curvature, and a viewing range of zero crosstalk between left and right eyes may be large.
Based on the above simulation model: $P_1$=145.44 $\mu$m, H=1057 $\mu$m, R=97 $\mu$m, and h2=11.3625 $\mu$m, a sub-pixel opening is 9.09 $\mu$m, the sub-pixel opening is scanned, angular spectra of light from sub-pixels at different opening positions are obtained, and positions of different sub-pixels are as shown in FIG. 12. Through computation according to the angular spectra, fluctuation of moire pattern contrast along with opening deviations of sub-pixels as shown in FIG. 13 is obtained. It may be seen that the embodiment of the disclosure may effectively reduce sensitivity influence on moire patterns caused by fluctuation of pixel apertures after increasing the aperture ratio of sub-pixels.

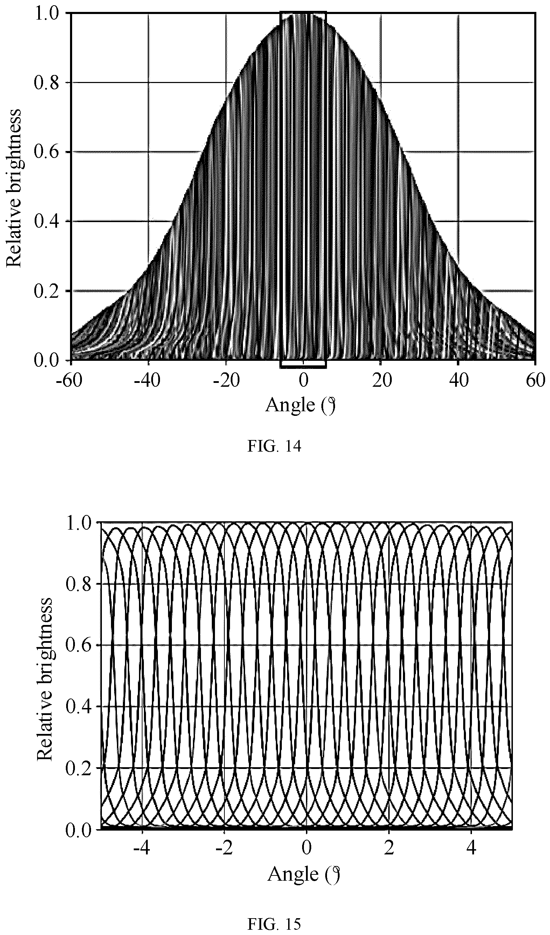

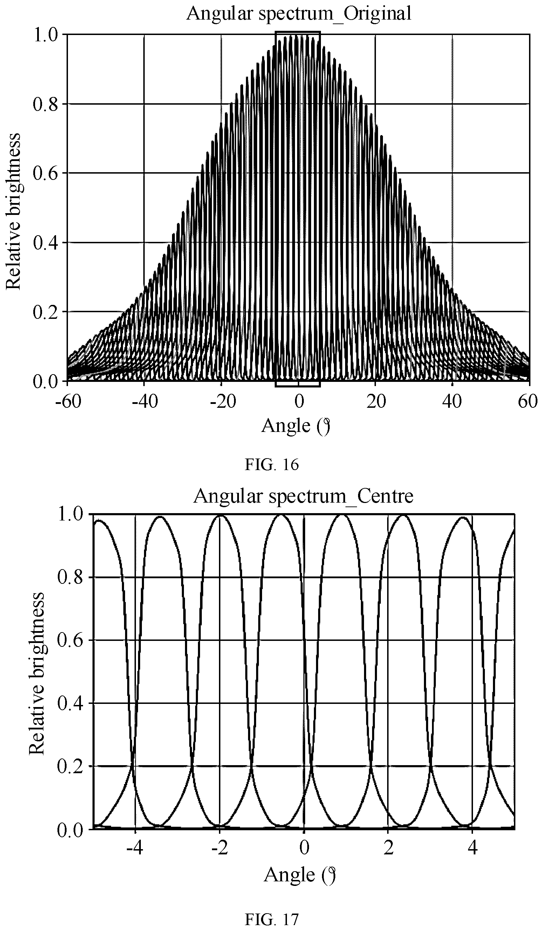

During specific implementation, M=4, and N=127. For a 31.5-inch display apparatus, RGB resolution is 3840×16×2160. In order to satisfy multi-user viewing and the cylindrical lens preparation process, a width of projections of 127 sub-pixels at 1 m is designed to be 807 mm, that is, W=807 mm. n1 - n2 =0.3, and a width P1 of the cylindrical lens in the row direction is 360.759375 $\mu$m. However, there are too many digits after a decimal point of P1. In order to reduce difficulty in manufacturing cylindrical lenses and ensure manufacturing accuracy, widths of a plurality of cylindrical lenses may be set to be not exactly the same in the row direction. For example, 16 cylindrical lenses are used as one group to design a width of the cylindrical lenses in the row direction. One group of cylindrical lenses include 15 cylindrical lenses with P1=360.76 $\mu$m and 1 cylindrical lens with P1=360.75 $\mu$m. The cylindrical lens may be a cylindrical lens including two resin layers or a liquid crystal lens. L1 =1000 mm, n3=1.5, H=700 mm, r=147 $\mu$m, an aperture of the cylindrical lens is 145 $\mu$m, and an arch height of the cylindrical lens is 19.12 $\mu$m. According to the above parameters, angular spectra of light emission as shown in FIGS. 14-15 are obtained through modeling and simulation. FIG. 14 is an angular spectrum of light emission of 127 sub-pixels; and FIG. 15 is an enlarged view of a solid box zone in FIG. 14. According to FIGS. 14 and 15, it may be seen that a correspondence between M and N in the solution may still achieve an effect of even overlapping between the light-emitting zones of all the sub-pixels in a space and avoid appearance of the "black zone".
During specific implementation, M=5, and N=32. For a 31.5-inch display apparatus, RGB resolution is 3840×16×2160. In order to satisfy multi-user viewing and the cylindrical lens preparation process, a width of projections of 32 sub-pixels at 1.5m is designed to be 130 mm, that is, W=130 mm. n1 - n2 =0.3, and a width P1 of the cylindrical lens in the row direction is 72.72 $\mu$m. The cylindrical lens may be a cylindrical lens including two resin layers or a liquid crystal lens. L1 =1500 mm, n3=1.5, H=1259 mm, r=259 $\mu$m, an aperture of the cylindrical lens is 72.72 $\mu$m, and an arch height is 2.56 $\mu$m. According to the above parameters, angular spectra of light emission as shown in FIGS. 16-17 are obtained through modeling and simulation. FIG. 16 is an angular spectrum of light from 32 sub-pixels; and FIG. 17 is an enlarged view of a solid box zone in FIG. 16. According to FIGS. 16 and 17, it may be seen that a correspondence between M and N in the solution may still achieve an effect of even overlapping between the light-emitting zones of all the sub-pixels in a space and avoid appearance of the "black zone".

During specific implementation, when M=5, N=32, and N=K*n, K=2, and n=16. For a 31.5-inch display apparatus, RGB resolution is still $3840 \times 16 \times 2160$. The width h2 of the pixel island is 181.8 $\mu$m. In order to satisfy multi-user viewing and the cylindrical lens preparation process, a width of projections of 32 sub-pixels at 1.5 m is still designed to be 130 mm, that is, W=130 mm. $n1 - n2$ =0.3, and a width P1 of the cylindrical lens in the row direction is 72.72 $\mu$m. The cylindrical lens may be a cylindrical lens including two resin layers or a liquid crystal lens. $L1$ =1500 mm, n3=1.5, H=1259 mm, r=259 $\mu$m, an aperture of the cylindrical lens is 72.72 $\mu$m, and an arch height is 2.56 $\mu$m. According to the above parameters, angular spectra of light emission as shown in FIGS. 16-17 are obtained through modeling and simulation. FIG. 16 is an angular spectrum of light emission of 32 sub-pixels; and FIG. 17 is an enlarged view of a solid box in FIG. 16. According to FIGS. 16 and 17, it may be seen that a correspondence between M, K, n and N in the solution may still achieve an effect of even overlapping between the light-emitting zones of all the sub-pixels in a space and avoid appearance of the "black zone".

During specific implementation, M=4, and N=185. For a 31.5-inch display apparatus, RGB resolution is $3840 \times 16 \times 2160$. In order to satisfy multi -user viewing and the cylindrical lens preparation process, a width of projections of 185 sub-pixels at 1 m is designed to be 1143.1 mm, that is, W=1143.1 mm. $n1 - n2$ =0.3, and a width P1 of the cylindrical lens in the row direction is 525.515625 $\mu$m. The cylindrical lens may be a cylindrical lens including two resin layers or a liquid crystal lens. $L1$ =1000 mm, n3=1.5, H=750 mm, r=157 $\mu$m, an aperture of the cylindrical lens is 150 $\mu$m, and an arch height is 19.07 $\mu$m.

During specific implementation, M=4, and N=205. For a 31.5-inch display apparatus, RGB resolution is $3840 \times 16 \times 2160$. In order to satisfy multi -user viewing and the cylindrical lens preparation process, a width of projections of 205 sub-pixels at 1 m is designed to be 1032.3 mm, that is, W=1032.3 mm. $n1 - n2$ =0.55, and a width P1 of the cylindrical lens in the row direction is 585.38215 $\mu$m. $L1$ =1000 mm, n3=1.5, H=830 mm, r=311 $\mu$m, an aperture of the cylindrical lens is 474 $\mu$m, and an arch height is 109.62 $\mu$m.

During specific implementation, M=5, and N=64. For a 31.5-inch display apparatus, RGB resolution is $1920 \times 16 \times 1080$. In order to satisfy multi -user viewing and the cylindrical lens preparation process, a width of projections of 64 sub-pixels at 0.5 m is designed to be 130 mm, that is, W=130 mm. $n1 - n2$ =0.3, and a width P1 of the cylindrical lens in the row direction is 122.4 $\mu$m. The

cylindrical lens may be a cylindrical lens including two resin layers or a liquid crystal lens. $L1$ =500 mm, n3=1.5, H=707 mm, r=45 $\mu$m, an aperture of the cylindrical lens is 72.72 $\mu$m, and an arch height is 13.55 $\mu$m.

In some embodiments, in the row direction, an absolute value of a width difference between different sub-pixel opening regions is smaller than or equal to 2.5 $\mu$m. In this way, moire patterns caused by large opening deviations of sub-pixels at different positions may be avoided, and a display effect may be improved.

During specific implementation, in order to further avoid influence of fluctuation of sub-pixel opening regions on moire patterns, an absolute value of a width difference between different sub-pixels may be set to be smaller than or equal to 0.6 $\mu$m in the row direction.

In some embodiments, the display apparatus further includes an eye-tracking system configured to determine a position of eyes of a user in real time.

The display apparatus provided in the embodiment of the disclosure may be any product or component with a display function, such as a mobile phone, a tablet computer, a television, a display screen, a notebook computer, a digital photo frame, a navigator, a smart watch, a fitness wristband, and a personal digital assistant. Other essential components of the display apparatus should be understood by those of ordinary skill in the art, which will not be repeated herein and should not limit the disclosure.

In conclusion, in the display apparatus provided in the embodiment of the disclosure, M light-splitting structures correspondingly cover N columns of sub-pixels, both M and N are integers greater than 1, that is, the light-splitting structures and the sub-pixels are in many-to-many correspondence. Sizes of the light-splitting structures in the row direction may be prevented from being too small, difficulty in manufacturing the light-splitting assembly may be prevented from being increased, and influence on a display effect caused by increased crosstalk between views due to increase in a light-emitting divergence angle of a sub-pixel due to diffraction of a light-splitting structure too small in size may be further avoided.

Although preferred embodiments of the disclosure have been described, those skilled in the art can still make additional changes and modifications to the embodiments once they learn the basic inventive concept. Therefore, the appended claims are intended to be interpreted as including the preferred embodiments and all changes and modifications falling within the scope of the disclosure.

Apparently, those skilled in the art can make various modifications and variations to the embodiments of the disclosure without departing from the spirit and scope of the embodiments of the disclosure. In this way, if the modifications and variations of the embodiments of the disclosure fall within the scope of the claims of the disclosure and their equivalent technologies, the disclosure is also intended to include the modifications and variations.

**Claims**

1. A display apparatus, comprising:

a display panel, wherein the display panel comprises a plurality of pixel islands arranged in arrays in a row direction and a column direction, and each pixel island comprises a plurality of sub-pixels arranged at intervals in the row direction; and
a light-splitting assembly at a display side of the display panel, wherein the light-splitting assembly comprises a plurality of light-splitting repeating units extending in the column direction and continuously arranged in the row direction, the light-splitting repeating unit comprises M light-splitting structures extending in the column direction and continuously arranged in the row direction, and each light-splitting repeating unit correspondingly covers N columns of sub-pixels; wherein both M and N are integers greater than 1, and M and N are relative prime to each other.

2. The display apparatus according to claim 1, wherein each light-splitting repeating unit corresponds to K columns of pixel islands, and K is an integer greater than 1.

3. The display apparatus according to claim 2, wherein N and K are relative prime to each other.

4. The display apparatus according to claim 2, wherein N/K is an integer.

5. The display apparatus according to claim 4, wherein each pixel island comprises n sub-pixels arranged at intervals in the row direction, n being an integer greater than 1; and
each light-splitting repeating unit correspondingly covers K columns of pixel islands, and N=K*n, K being an integer greater than 1, and M and K being relative prime to each other.

6. The display apparatus according to any one of claims 1-5, wherein light rays emitted from light-emitting zones of N columns of sub-pixels and split by M light-splitting structures form a continuous light-emitting zone in a space.

7. The display apparatus according to claim 6, wherein in a horizontal direction, a width of M light-splitting structures is equal to a width of N columns of sub-pixels.

8. The display apparatus according to claim 7, wherein the sub-pixels comprise sub-pixel opening regions; and in the row direction, a ratio of a total width of n sub-pixel opening regions to a width of the pixel island is greater than or equal to 0.9/M and smaller than or equal to 1.

9. The display apparatus according to claim 8, wherein in the row direction, the light-emitting zones of N columns of sub-pixels are complementarily spliced in a space.

10. The display apparatus according to claim 9, wherein in the row direction, a ratio of a width of the sub-pixel opening regions to the width of the pixel island is 1/M.

11. The display apparatus according to claim 8, wherein in the row direction, the light-emitting zones of N columns of sub-pixels overlap each other in a space.

12. The display apparatus according to claim 11, wherein in the row direction, the light-emitting zones of N columns of sub-pixels evenly overlap each other in a space.

13. The display apparatus according to claim 12, wherein in the row direction, a ratio of a width of the sub-pixel opening regions to the width of the pixel island is i/M, i being an integer greater than 1 and smaller than or equal to M-1.

14. The display apparatus according to any one of claims 8-13, wherein in the row direction, an absolute value of a width difference between different sub-pixel opening regions is smaller than or equal to 2.5 µm.

15. The display apparatus according to any one of claims 1-14, further comprising:
a spacer dielectric layer between the light-splitting assembly and the display panel.

16. The display apparatus according to claim 15, wherein the light-splitting structure is a cylindrical lens.

17. The display apparatus according to claim 16, wherein the cylindrical lens comprises:

a first resin layer having a protrusion; and
a planarization resin layer at a side of the first resin layer facing away from the display panel; wherein a refractive index of the planarization resin layer is smaller than a refractive index of the first resin layer.

18. The display apparatus according to claim 16, wherein the cylindrical lens is a liquid crystal lens.

**19.** The display apparatus according to claim 17 or 18, wherein a radius of curvature of the cylindrical lens is greater than or equal to 0.87r and smaller than or equal to 1.33r;

wherein

$$r = \frac{(n1 - n2)}{n3} \times \frac{n3 L1 P1}{W};$$

wherein n1 is a refractive index of the first resin layer or an extraordinary-light refractive index of the liquid crystal lens;
n2 is a refractive index of the planarization resin layer or an ordinary-light refractive index of the liquid crystal lens;
n3 is a refractive index of the spacer dielectric layer;
L1 is an optimal viewing distance of the display apparatus;
P1 is a width of the cylindrical lens in the row direction; and
W is a width of a projection of a main lobe viewing angle formed by light rays emitted from the sub-pixel at the optimal viewing distance.

**20.** The display apparatus according to any one of claims 1 and 6-16, wherein

M is 4, and N is 127;
M is 4, and N is 185;
M is 5, and N is 16;
M is 5, and N is 32;
M is 5, and N is 64; or
M is 5, and N is 128.

**21.** The display apparatus according to any one of claims 5-16, wherein

M is 5, K is 4, and n is 4;
M is 5, K is 4, and n is 16;
M is 3, K is 4, and n is 32; or
M is 5, K is 2, and n is 16.

**22.** The display apparatus according to any one of claims 1-21, wherein every three pixel islands continuously arranged in the column direction constitute one pixel repeating unit; and
in one pixel repeating unit, colors of sub-pixels in a same pixel island are same, and colors of sub-pixels in different pixel islands are different.

**23.** The display apparatus according to any one of claims 1-22, further comprising:
an eye-tracking system configured to determine a position of eyes of a user in real time.

FIG. 1

FIG. 2

FIG. 4

FIG. 5

FIG. 6

FIG. 7

FIG. 8

FIG. 9

FIG. 10

FIG. 11

Position 3
(0, 1000)

Position 4        Position 1        Position 5
(-100, 630)       (0, 630)          (100, 630)

Position 2
(0, 500)

FIG. 12

FIG. 13

FIG. 14

FIG. 15

Angular spectrum_Original

FIG. 16

Angular spectrum_Centre

FIG. 17

**INTERNATIONAL SEARCH REPORT**

| International application No. |
|---|
| **PCT/CN2022/132070** |

**A. CLASSIFICATION OF SUBJECT MATTER**

H04N 13/00(2018.01)i; H04N 13/305(2018.01)i; H01L 27/32(2006.01)i

According to International Patent Classification (IPC) or to both national classification and IPC

**B. FIELDS SEARCHED**

Minimum documentation searched (classification system followed by classification symbols)

H04N; H01L

Documentation searched other than minimum documentation to the extent that such documents are included in the fields searched

Electronic data base consulted during the international search (name of data base and, where practicable, search terms used)

CNTXT; WPABSC; ENTXT; ENTXTC; VEN; CNKI: 三维, 3D, 多视点, 行, 列, 分光, 质数, 互质, 子像素, 高健, 开口率, 串扰, 透镜, row?, column?, spectral, light, beam, prime, number?, coprime, co-prime, sub, pixel?, open+, ratio?, crosstalk, lens+

**C. DOCUMENTS CONSIDERED TO BE RELEVANT**

| Category* | Citation of document, with indication, where appropriate, of the relevant passages | Relevant to claim No. |
|---|---|---|
| X | CN 113903785 A (BOE TECHNOLOGY GROUP CO., LTD.) 07 January 2022 (2022-01-07) description, paragraphs 0037-0089, and figures 1-11 | 1-4, 6-18, 20, 22-23 |
| A | CN 107580211 A (LG DISPLAY CO., LTD.) 12 January 2018 (2018-01-12) entire document | 1-23 |
| A | CN 103096109 A (INFOVISION OPTOELECTRONICS (KUNSHAN) CO., LTD.) 08 May 2013 (2013-05-08) entire document | 1-23 |
| A | JP 2005223727 A (RICOH K. K.) 18 August 2005 (2005-08-18) entire document | 1-23 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **20 December 2022** | **04 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/132070**

| Patent document cited in search report | | | Publication date (day/month/year) | Patent family member(s) | | | Publication date (day/month/year) |
|---|---|---|---|---|---|---|---|
| CN | 113903785 | A | 07 January 2022 | None | | | |
| CN | 107580211 | A | 12 January 2018 | US | 2018007349 | A1 | 04 January 2018 |
| | | | | KR | 20180003739 | A | 10 January 2018 |
| | | | | KR | 101835060 | B1 | 07 March 2018 |
| | | | | CN | 107580211 | B | 10 May 2019 |
| | | | | US | 10986329 | B2 | 20 April 2021 |
| CN | 103096109 | A | 08 May 2013 | CN | 103096109 | B | 06 May 2015 |
| JP | 2005223727 | A | 18 August 2005 | US | 2004263968 | A1 | 30 December 2004 |
| | | | | US | 7245430 | B2 | 17 July 2007 |
| | | | | JP | 4495982 | B2 | 07 July 2010 |

Form PCT/ISA/210 (patent family annex) (January 2015)

**EP 4 482 139 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022092469 W